Europäisches Patentamt

European Patent Office

Office européen des brevets

(11) Publication number: **0 325 223**
**A1**

(12) # EUROPEAN PATENT APPLICATION

(21) Application number: **89100779.1**

(22) Date of filing: **18.01.89**

(51) Int. Cl.⁴: **C08G 61/08 , C08J 3/22**

(30) Priority: **21.01.88 US 146427**

(43) Date of publication of application:
**26.07.89 Bulletin 89/30**

(84) Designated Contracting States:
**AT BE CH DE ES FR GB GR IT LI LU NL SE**

(71) Applicant: THE B.F. GOODRICH COMPANY
3925 Embassy Parkway
Akron Ohio 44313-1799(US)

(72) Inventor: Janda, Dennis Joseph
3117 Coventry Drive
Parma Ohio 44134(US)
Inventor: Barnes, Dennis Allen
3888 Huffman Road
Medina Ohio 44256(US)

(74) Representative: von Kreisler, Alek,
Dipl.-Chem. et al
Patentanwälte Von Kreisler-Selting-Werner
Deichmannhaus am Hauptbahnhof
D-5000 Köln 1(DE)

(54) **Process for incorporating particulate additives in a polycycloolefin.**

(57) A procedure for distributing particulate additives in RIM and other reactive molded cycloolefin monomers is described. These additives are first dispersed in a solid or highly viscous polymeric material which is soluble in the monomer or monomers from which the polycycloolefin is to be polymerized, and then the dispersion is dissolved in the monomer or monomers. The monomers may then be utilized in typical reactive molding procedures involving combining two or more liquid streams of monomer containing various components of a methathesis catalyst system which becomes fully activated only upon combination and conveying the combination to a heated mold where it polymerizes.

## PROCESS FOR INCORPORATING PARTICULATE ADDITIVES IN A POLYCYCLOOLEFIN

### BACKGROUND OF THE INVENTION:

A more recent development in the art of reactive processing of monomers and/or prepolymers into molded plastic articles is reaction injection molding (RIM) wherein a mold is filled with one or more monomers which then polymerize in the mold to form the finished article. This procedure has been applied to a number of chemical systems including polyurethanes, polylactams and polycycloolefins. Some of the earlier efforts to practice this methodology with homopolymers of dicyclopentadiene are described in U.S. Patent No. 4,400,340. The concept of utilizing a low level of comonomer (up to about 10%) in technology is briefly touched upon in U.S. Patent No. 4,436,858. A more extensive treatment of the application of RIM technology to polycycloolefins including a discussion of the requirements of an appropriate catalyst system is found in U.S. Patent No. 4,426,502.

In RIM and other reactive molding systems, any additives which are desired are advantageously added to the monomer or monomers before polymerization is initiated. Generally polymerization is initiated by mixing two or more liquid streams of monomer, each containing different portions of the catalyst system which becomes fully activated only upon combining of all the component parts, and by then conveying the mixture to a heated mold. These systems are generally designed to spend a minimum time in the mold before the polymerization reaction is complete and a thermoplastic or thermoset plastic article is formed. Thus it would be difficult to make additions to the mixture conveyed to the mold. Furthermore the liquid streams in RIM are typically mixed by impingement mixers which are not readily adapted to also incorporating particulate additives.

It is sometimes beneficial to include particulate additives in the polycycloolefin. U.S. Patent No. 4,400,340 indicates that the incorporation of between 20 and 33 weight percent of additives such as glass, wollastonite, mica, carbon black, talc or calcium carbonate can have a beneficial effect upon mold shrinkage and, in some cases, flexural modulus. In this patent the additives are simply slurried into the monomer. However, such a procedure is not likely to obtain an optimum distribution of the particulate additive in the molded article.

Frequently the particulate additives are loosely agglomerated and the shear obtained upon simply stirring them into the monomer is inadequate to completely break up these agglomerates. Thus if the mixture so obtained is examined in a clear container, such as a laboratory flask, "lumps" of additive area readily observed upon splashing the mixture against the wall of the container. If such a mixture is processed to a molded part, it is expected that the efficiency of the particulate additive will be significantly less than if the distribution had been uniform. For instance more carbon black or titanium dioxide will be required to achieve the same level of blackness or whiteness, respectively, than if the colorant had been more uniformly distributed in the precursor monomer.

Thus there is a need for a procedure for obtaining a more uniform dispersion of particulate additives in the precursor liquid monomer or monomers.

### Summary of the Invention

A more uniform dispersion of particulate additives in liquid cycloolefin monomers is obtained by first dispersing these additives with intensive mixing in a solid or highly viscous polymeric material which is soluble in said monomers and then dissolving this material in the monomers. This technique provides the basis for an overall procedure of obtaining molded articles of thermoplastic or thermoset polycycloolefin with more uniform distributions of particulate additives by utilizing such monomer dispersions in reactive molding processes including RIM.

### Detailed Description of the Invention

The monomers which can be used in the present invention are any of those recognized as having utility in reaction injection molding of polycycloolefins. A discussion of suitable monomers appears in U.S. Patent No. 4,426,502 which directs one to norbornene type monomers including substituted and unsubstituted norbornenes, dicyclopentadienes and dihydrodicyclododecenes. Particular suitable monomers include dicyclopentadiene, methyltetracyclododecene, 2-norbornene, 5-methyl-2-norbornene, 5,6-dimethyl-2-norbornene, 5-ethyl-2-norbornene, 5-butyl-2-norbornene, 5-hexyl-2-norbornene, 5-octyl-2-norbornene and 5-dodecyl-2-norbornene. Preferred monomers include dicyclopentadiene, methyltetracyclododecene, ethylidene norbornene and cyclopentadiene trimers and tetramers. Especially preferred for economic reasons is dicyclopentadiene.

A single monomer may be utilized to yield a homopolymer or a mix of monomers may be used to yield a copolymer of two or more different monomers. A particularly preferred mixture comprises dicyclopentadiene and up to 20 weight percent of ethylidene norbornene, cyclopentadiene trimers and tetramers or a mixture thereof. Also preferred are other monomer mixtures which are liquid at room temperature.

The monomer or monomer mixture is divided into at least two liquid streams and at least two streams are provided with different components of a methathesis catalyst system such that this catalyst system is only fully activated upon the combination of these streams.

The methathesis catalyst system may be any of those recognized in the prior art as being suitable for the bulk polymerization of norbornene group bearing monomers. A preferred system comprises an organoammonium molybdate or an organoammonium tungstate catalyst, an aluminum based cocatalyst and a halo metal activator wherein the metal is selected from the group consisting of tin, lead, magnesium, antimony, boron, germanium and silicon. An especially preferred system has an alkoxyalkylaluminum, aryloxyalkylaluminum, aryloxyalkylaluminum halide or alkoxyalkylaluminum halide as a cocatalyst and an alkyl silicon halide or a tetrahalosilane as an activator. Silicon tetrachloride is a particularly preferred activator. Silicon tetrachloride is a particularly preferred activator. The activator is preferably used at a level of between about 0.05 and 10 millimoles per mole of cycloolefin monomer. The other components of the methathesis catalyst may be used at the levels typical in the art. A discussion of suitable aluminum based cocatalysts and suitable levels of both catalyst and cocatalyst appears in U.S. Patent No. 4,426,502.

The particulate additives may be any of those recognized as having utility in the reaction injection molding of polycycloolefins. These include pigments such as carbon black, titanium dioxide and red iron oxide; fillers such as calcium carbonate and silica; and particulate flame retardant materials such as decabromodiphenylether and antimony trioxide. The pigments and fillers may serve more than one function. For instance, the carbon black may serve as a colorant, filler and UV absorber. The fillers such as silica may serve to not only reduce mold shrinkage but also to enhance the flexural modulus. The key features of these addivites are that they serve a recognized function in the polycycloolefin matrix which is better served if they are uniformly dispersed, that they have some tendency to agglomerate and that they are insoluble in the monomer or monomer mixture which polymerizes to the final thermoplastic or thermoset article.

The polymeric material may be essentially any polymer which is a solid or highly viscous liquid at room temperature, which is soluble in the monomer or monomer mixture from which the polycycloolefin is polymerized and which does not adversely affect the methathesis catalyst system. Among the preferred materials are hydrocarbon elastomers, especially those which substantially enhance the impact strength (particularly as evaluated by notched Izod). Suitable elastomers include polybutadiene, butyl rubber, polyisoprene, polyisobutylene, ethylenepropylene copolymer, styrene-butadiene-styrene triblock rubber, styrene-isoprene-styrene triblock rubber and ethylenepropylenediene terpolymers. The molecular weight of the polymeric material is not critical so long as it is still soluble in the monomer or monomer mixture.

The polymeric material may be combined with as much as 80 weight percent of particulate additive. However, it is preferred to disperse no more than about 50 weight percent, more preferably no more than about 40 weight percent and most preferably no more than about 30 weight percent of additive in the polymeric material. The higher the loading of additive the more difficult it is to obtain a uniform dispersion and consequently a uniform distribution in the polycycloolefin.

The particulate additive may be dispersed into the polymeric material in any manner conventional for dispersing solid particulates in a polymer matrix. It is preferred to utilize an apparatus which is capable of intensive mixing. Suitable techniques are disclosed in the various editions of Chemical Engineer's Handbook edited by John H. Perry such as those disclosed at pages 1566 to 1577 of the Second Edition, 1941. Among the suitable techniques are mixing the additive into the polymeric material on a rubber compounding mill, mixing the additive and polymeric material in an extruder, or mixing the two ingredients in a banbury. It is preferred to use a technique which yields small pieces of dispersion which may be readily dissolved in the monomer or monomer mixture. For instance extruded material is preferably processed to small granules and milled material is preferably chopped into small pellets.

The additive containing dispersion may be added to the monomer or monomer mixture in a wide range of amounts. The primary concern is the effect upon the viscosity of the resultant composition. The viscosity should not be so high as to interfere with the impingement mixing which is typically a part of reaction injection molding. Although the literature has reported practicing RIM with materials having viscosities as high as 10,000 cps it is preferred to maintain the viscosity of the final composition at no more than about 1500 cps most preferably no more than about 1000 cps. It is preferred to add between about 1.5 and 15, more preferably between 3.5 and 8 parts of polymer dispersion to 100 parts of monomer or monomer mixture, especially when the dispersion contains about 30 weight percent of additive.

The polymeric dispersion may be dissolved in the monomer or monomer mixture either before or after it is separated into different portions for combination with various components of the catalyst system. It may also be combined with one, some or all of the separate portions. It is generally preferred to add this polymer dispersion to all of the components which will be combined to form the molded polycycloolefin article. However, in cases in which the particulate material in the polymeric dispersion or the polymeric material might interact with one or another of the components of the catalyst system it is preferred not to combine the dispersion with the portion of monomer or monomer mixture to be combined with that catalyst component.

The procedure of the present invention may be beneficially utilized in combination with the known procedures of reactive molding systems of polycycloolefins including reaction injection molding (RIM) and resin transfer molding (RTM). Thus it may be used to prepare one or more liquid monomer streams which are conveyed to a mixing apparatus and then a mold. In such a procedure each separate stream typically contains different components of a methathesis catalyst system which becomes fully activated only after all the components are combined. Suitable catalyst systems are described in U.S. Patent Nos. 4,400,340 and 4,426,502. In the former patent, suitable catalyst systems include the reaction product of tungsten hexachloride and tertiary butylphenol as one component and diethyl aluminum chloride or ethyl aluminum dichloride as the other component with certain ethers, ketones or esters being used as moderators. In the latter patent suitable catalyst systems include organo ammonium molybdates or organo ammonium tungstates as one component and alkoxyalkylaluminum halides or aryloxyalkylaluminum halides as the other component.

The invention described herein is illustrated by the following examples in terms of specific materials and operating conditions employed but it is not to be limited thereby.

EXAMPLE 1

Masterbatches were prepared by combining carbon black and a saturated styrene ethylene butylene styrene block copolymer with a styrene ratio of 29:71 and a Brookfield 77°F viscosity as a 25 weight percent solution in toluene of 1350 cps on a two roll rubber compounding mill until a uniform sheet was obtained. In one case 33 parts of carbon black were combined with 66 parts of copolymer while in the other case 50 parts of each ingredient was utilized. The sheet obtained from each formulation was diced and a portion of the obtained particles was dissolved in methyltetracyclododecene (MTD). In the former case it appeared on visual examination that a uniform dispersion had been obtained while in the latter case some aggregates of carbon black were still apparent.

EXAMPLE 2

Masterbatches were prepared by combining either 924 parts of titanium dioxide or 924 parts of carbon black with 2156 parts of an unsaturated elastomer which is a styrene-butadiene-styrene block copolymer with a styrene to rubber ratio of 28:72 and melt index under condition G of 6 grams per ten minutes in a banbury mixer. The blends were sheeted out on a two roll rubber compounding mill and the sheets were diced.

These masterbatches were subsequently dissolved in mixtures of dicyclopentadiene and ethylidene norbornene to give uniform distributions of the colorant or colorants. In one case approximately 7 parts of the carbon black masterbatch was added to about 82 parts of mixture of 92.5 weight percent of dicyclopentadiene and 7.5 weight percent of the ethylidene norbornene. In another case approximately 2.8 parts of the carbon black masterbatch and approximately 3.5 parts of the titanium dioxide masterbatch were added to approximately 81.5 parts of the same monomer mixture. In both cases the elastomer dissolved smoothly leaving the pigment or pigments uniformly dispersed in the liquid monomer mixture.

These monomer mixtures were subsequently successfully utilized in a RIM procedure. In each case the monomer mixture was divided into two portions and additions of other ingredients were made to each portion. In both cases a molybdate catalyst and antioxidant were added to one portion and a combination of propoxy ethyl aluminum chloride cocatalyst and silicon tetrachloride activator were added to the other portion. In the latter case antimony trioxide was added to the molybdate catalyst containing portion and a brominated flame retardant was added to the cocatalyst portion. In both cases the two portions were combined in an impingement mixer and then conveyed to a heated mold to yield an appropriately colored article.

## EXAMPLE 3

A masterbatch was prepared by combining both carbon black and titanium dioxide with an unsaturated styrene butadiene branched elastomeric copolymer with a styrene to butadiene ratio of 30:70 and a Brookfield viscosity as a 25 weight percent solution in toluene at 77°F of 20,000 cps. In particular 13.33 parts of carbon black and 16.67 parts of titanium dioxide were intensively mixed with 70 parts of the elastomer.

This masterbatch was added to a mixture of 90 weight percent of dicyclopentadiene and 10 weight percent of ethylidene norbornene. The elastomer dissolved smoothly leaving a uniform distribution of the pigments in the mixture. Other additives including another colorant masterbatch were added to this mixture, it was separated into two portions, further additions were made to each portion including the appropriate components of a methathesis catalyst system and the portions were combined in a RIM procedure to yield an appropriately colored article.

## Claims

1. In a process of reactive molding particulate additive containing cycloolefin monomer(s) by mixing at least two liquid streams of monomers containing at least one norbornene group, wherein the various components of a total metathesis catalyst package are present in different streams so that it is only fully activated upon mixing, and then conveying the mixture to a heated mold wherein the mixture polymerizes, the improvement comprising

(a) dispersing the particulate additive in a polymeric material that does not adversely affect the methathesis catalyst system and which is soluble in the norbornene group carrying monomers; and

(b) dissolving the dispersion of particulate additive in polymeric material in one or more of the liquid streams or the material out of which the streams are formed.

2. In the process of claim 1 wherein the polymeric material is a hydrocarbon elastomer that is solid or a viscous liquid at room temperature.

3. In the process of claim 1 wherein the dispersion of particulate additive in polymer is added to a composition comprising the norbornene containing monomers and then separate liquid streams are prepared from this material by adding various metathesis catalyst components to separate portions of this material.

4. In the process of claim 1 wherein the particulate additive is selected from the group consisting of carbon black, titanium dioxide, red iron oxide, and other pigments, non-monomer soluble brominated flame retardants, antimony trioxide, silica, calcium carbonate and mixtures thereof; wherein the dispersion of particulate additive in the polymeric material contains up to about 50 weight percent of particulate additive.

5. In the process of claim 1 wherein between 1.5 and 15 parts of the polymeric dispersion are added per 100 parts of norbornene group containing monomer.

6. In the process of claim 1 the further improvement wherein the particulate additive is selected from the group consisting of brominated flame retardants, antimony trioxide, silica, calcium carbonate and mixtures thereof; and wherein the dispersion of particulate additive in the polymeric material contains up to about 50 weight percent of particulate additive.

7. A process for the reactive molding of particulate additive containing cycloolefin monomers comprising

(a) dispersing up to about 35 weight percent of a particulate additive which does not adversely affect the metathesis catalyst system used in a hydrocarbon elastomer which is soluble in dicyclopentadiene;

(b) adding between about 1.5 and 15 parts of this polymer dispersion per 100 parts of a mixture of dicyclopentadiene and up to 20 weight percent of a monomer copolymerizable therewith;

(c) separating the composition so obtained into at least two portions;

(d) adding a different component of a total methathesis catalyst package to at least two such portions such that full catalytic activity is only obtained upon combining these portions; and

(e) mixing the separated portions and conveying the mixture to a heated mold where the mixture polymerizes.

8. The process of claim 7 wherein

(a) the monomer mixture comprises mostly dicyclopentadiene;

(b) the polymeric material is a hydroacarbon elastomer;

(c) up to about 35 weight percent particulate additive is dispersed in the hydrocarbon elastomer; and

(d) between about 1.5 and 15 parts of polymer dispersion are added per 100 parts of monomer mixture.

9. The process of claim 8 wherein

(a) the monomer mixture comprises between about 80 and 95 weight percent dicyclopentadiene;

(b) the other monomers present are selected from the group consisting of methyltetracyclododecene, ethylidenenorbornene, cyclopentadiene trimers and tetramers, and mixtures thereof; and

(c) the particulate additive is selected from the group consisting of carbon black, titanium dioxide, red iron oxide, other pigments, and mixtures thereof.

10. In a process of reactive molding particulate additive containing cycloolefin monomers by mixing at least two liquid streams of monomers containing at least one norbornene group, wherein the various components of a total methathesis catalyst package comprising an organoammonium molybdate or an organoammonium tungstate catalyst, an aluminum based cocatalyst, and a halometal activator wherein the metal is selected from the group consisting of tin, lead, magnesium, antimony, boron, germanium and silicon are present in different streams so that it is only fully activated upon mixing, and then conveying the mixture to a heated mold wherein the mixture polymerizes the improvement comprising

(a) dispersing the particulate additive in a polymeric material that does not adversely affect the metathesis catalyst system and which is soluble in the norbornene group carrying monomers; and

(b) dissolving the dispersion of particulate additive in polymeric material in one or more of the liquid streams or the material out of which the streams are formed.

11. In the process of claim 10 the further improvement wherein between 1.5 and 15 parts of the polymeric dispersion are added per 100 parts of norbornene group containing monomer.

12. In the process of claim 10 the further improvement wherein the particulate additive is selected from the group consisting of non-monomer soluble brominated flame retardants, antimony trioxide, silica, calcium carbonate, carbon black, titanium dioxide, red iron oxide, other pigments, and mixtures thereof.

13. In the process of claim 10 the further improvement wherein the cocatalyst of the methathesis catalyst package is an alkoxyalkylaluminum, aryloxyalkylaluminum, alkoxyalkylaluminum halide or an aryloxyalkylaluminum halide and the activator is an alkylsilicon halide or a tetrahalosilane.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.3) |
|---|---|---|---|
| A | EP-A-0 107 079 (THE B.F. GOODRICH COMPANY) * claims 1,2,4,7,9; page 3, lines 5-6; page 4, lines 7-20 * | 1,2,4,5 ,7-13 | C 08 G 61/08 C 08 J 3/22 |
| A | US-A-4 098 715 (MASUKO, T. et al.) * claim 1 * | 1 | |
| A | EP-A-0 096 877 (THE B.F. GOODRICH COMPANY) * claims 1,3,2,6,7-9; page 15, lines 25-33 *; & US - A - 44 26502 (MINCHAK; R.J.) (Cat. D,A) | 1,10 | |
| A | EP-A-0 084 888 (HERCULES INCORPORATED) * claims 1,2,6,18,25,26,28; page 10, 11-17, page 11, lines 3-14 *; & US - A - 44 00340 (KLOSIEWICZ) (Cat. D,A) | 1-6 | |

| | TECHNICAL FIELDS SEARCHED (Int. Cl.3) |
|---|---|
| | C 08 G C 08 J |

The present search report has been drawn up for all claims

| Place of search | Date of completion of the search | Examiner |
|---|---|---|
| BERLIN | 07-04-1989 | VOIGTLAENDER R O J |

EPO FORM 1503 03.82 (P0401)